# EUROPEAN PATENT APPLICATION

(11) **EP 4 778 947 A1**
(43) Date of publication of application: **22.07.2026**
(21) Application number: 25305069.4
(22) Date of filing: 20.01.2025
(51) Int. Cl.: C08F 122/10, C08F 222/10, C08K 3/22

(54) **CURABLE COMPOSITIONS HAVING HIGH FILLER CONTENT FOR MAKING ARTICLES INCLUDING MOLDS**

(71) Applicant: ARKEMA FRANCE, 92800 Puteaux (FR)
(72) Inventor: DAVENPORT, Amelia, Boulder, Colorado, 80301 (US); CRAMER, Neil, Boulder, Colorado, 80301 (US)
(74) Representative: Renard, Emmanuelle

(57) **Abstract**

This invention pertains to a curable composition comprises at least one monomer having at least one (meth)acrylate end group, selected from the group consisting of (meth)acrylate esters of alcohols having at least seven consecutive carbon atoms, and alkoxylated derivatives thereof; optionally, a (meth)acrylate oligomer in an amount of at least 1 wt% and at most 40 wt% based on the weight of the composition other than E) the filler; at least one non-reactive diluent in an amount of at least about 5 wt% and at most 40 wt% based on the weight of the composition other than E) the filler; a free radical photoinitiator; and at least one filler in an amount of at least 30 vol% based on the total volume of the curable composition. This composition is suitable for use in the fabrication of articles, such as ceramic articles, including industrial, consumer and medical products and molds used for casting and thermoforming articles. This invention is also directed to a method for making an article comprises curing the composition then sintering it.

## Description

### TECHNICAL FIELD

The present invention relates to curable compositions having a high content of filler suitable for making by 3D printing articles, such as ceramic articles, including industrial, consumer and medical products and molds used for casting, and methods for making such articles.

### BACKGROUND OF THE INVENTION

Three-dimensional ("3D") printing composites made from organic resins and fillers (e.g., ceramic or metal particles or powders) are finding increasing use in complex manufacturing applications such as stereolithographic (SLA) and digital light processing (DLP) printers. For both SLA and DLP, a vat of photoreactive liquid resin is selectively exposed to light in order to form very thin solid layers that stack up to create one solid object. SLA printers use two motors, known as galvanometers or galvos, (one on the X axis and one on the Y axis) to rapidly aim a laser beam across the print area, solidifying resin as it progresses. This process breaks down the design, layer by layer, into a series of points and lines that are given to the galvonometer as a set of coordinates. DLP printers use a digital projector screen to flash a single image of each layer across the entire platform at once. Because the projector is a digital screen, the image of each layer is composed of square pixels, resulting in a layer formed from small rectangular bricks called voxels. Regardless of its application, both SLA and DLP printers employ light to polymerize the resin thereby securing the fillers in desired locations.

In 3D printing a blend of curable components and a filler to form a ceramic article, it is generally desirable to maximize the amount of filler because a high amount of filler reduces shrinkage during the burn-out and sintering process and creates a high density final article. It can often be challenging to achieve a high enough loading of fillers into a binder system to make good final parts. At high loadings of filler, the 3D printing process can be challenging from stability, resolution, and viscosity perspectives. There are issues with integrity of the 3D printed part after printing but prior to finishing. Additionally, there can be issues with the sintering process due to the combustion mechanism of the binder system which can limit geometries.

International Published Patent Application No. WO 2021/048628 discloses the use of high refractive index monomers for ceramic/metal 3D printing applications. The compositions disclosed therein have a higher refractive index and thus better resolution and lower scattering of the light when employed in a composition to deposit fillers such as ceramic or metallic particles. The disclosed compositions also include low refractive crosslinkers selected for their good thermal decomposition and reactivity to provide good cohesion during the 3D printing. The photo-curable compositions for use in a composition suitable for three-dimensional printing, comprises a monomer composition comprising at least one monomer having a refractive index of at least 1.49; a cross-linker; and a plasticizer.

U.S. Patent No. 11,696,875 discloses a curable composition for producing dental composite crowns, the composition comprising a resin matrix comprising polymerizable (meth)acrylate(s) not comprising a urethane moiety and polymerizable urethane(meth)acrylate(s), wherein the polymerizable (meth)acrylate(s) not comprising a urethane moiety are used in excess over the polymerizable urethane(meth)acrylate(s); a filler matrix typically present in an amount from 5 to 45 wt. % and comprising nanocluster(s), fumed silica in an amount below 8 wt. % with respect to the weight of the whole composition; an initiator system comprising photoinitiator(s); organic dye(s); the curable composition not comprising softener in an amount of more than 5 wt. % with respect to the weight of the whole composition, the curable composition having a viscosity below 150 Pa*s at 23° C. and a shear rate of 1 s⁻¹.

### SUMMARY OF THE INVENTION

This invention pertains to a curable composition comprising:
A) at least one (meth)acrylate monomer having at least one (meth)acrylate end group, selected from the group consisting of (meth)acrylate esters of alcohols having at least seven consecutive carbon atoms, and alkoxylated derivatives thereof;
B) optionally, at least one (meth)acrylate oligomer in an amount of at least 1 wt%, preferably at least 5 wt%, and more preferably at least 12 wt%, and at most 40 wt%, preferably at most 37 wt%, and most preferably at most 35 wt% based on the weight of the composition other than E) the filler;
C) at least one non-reactive diluent in an amount of at least about 5 wt%, preferably at least 7 wt%, and most preferably at least about 8 wt% and at most 40 wt%, preferably at most 35 wt%, and most preferably at most 30 wt% based on the weight of the composition other than E) the filler;
D) a free radical photoinitiator; and
E) at least one filler in an amount of at least 30 vol %, preferably at least 32 vol%, preferably at least 35 vol %, preferably at least 37 vol% and more preferably at least 40 vol % based on the total volume of the curable composition.

The present invention also pertains to a method for making a 3D-printed article comprising the steps of:
(a) curing the curable composition as described above in a 3D printer to form a cured article comprising filler particles and a binder made from the curable composition, and
(b) heating the cured article to a temperature sufficient to burn off all of the material other than the filler, including the binder.

The invention is further directed to a method for making a ceramic article comprising the steps of:
(a) curing the curable composition according as described above in a 3D printer to form a cured article comprising filler particles and a binder made from the curable composition,
(b) heating the cured article to a temperature sufficient to burn off all of the material other than the filler, including the binder, and
(c) sintering the article obtained in step (b) by exposing it to a temperature sufficient to fuse filler particles together.

### DETAILED DESCRIPTION OF THE INVENTION

Embodiments described herein can be understood more readily by reference to the following detailed description and examples. Elements, apparatus, and methods described herein, however, are not limited to the specific embodiments presented in the detailed description and examples. It should be recognized that these embodiments are merely illustrative of the principles of the present disclosure. Numerous modifications and adaptations will be readily apparent to those of skill in the art without departing from the spirit and scope of the disclosure.

In addition, all ranges disclosed herein are to be understood to encompass any and all subranges subsumed therein. For example, a stated range of "1.0 to 10.0" should be considered to include any and all subranges beginning with a minimum value of 1.0 or more and ending with a maximum value of 10.0 or less, e.g., 1.0 to 5.3, or 4.7 to 10.0, or 3.6 to 7.9. Furthermore, values of parameters expressed with various ranges disclosed shall encompass different ranges extending from the lower limit of one of the disclosed ranges to an upper limit of another of the disclosed ranges. All ranges disclosed herein are also to be considered to include the end points of the range, unless expressly stated otherwise.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements).

The terms "3D printing system," "3D printer," "printing," and the like generally describe various solid freeform fabrication techniques for making three-dimensional articles or objects by stereolithography, selective deposition, jetting, fused deposition modeling, multi-jet modeling, digital light processing, gel deposition and other additive manufacturing techniques now known in the art or that may be known in the future that use a build material or ink to fabricate three-dimensional objects.

As used herein, the term "slurry" means a free-flowing or flowable and/or pumpable suspension (at room temperature) including solid materials in a suitable solvent.

The term "(meth)acrylate group" as used herein refers to an acrylate group or a methacrylate group. An acrylate group corresponds to an acryloyl group of formula -C(=O)-CH=CH2. A methacrylate group corresponds to a methacryloyl group of formula -C(=O)-C(CH3)=CH2.

The term "curable composition" as used herein refers to a composition comprising at least one compound having at least one ethylenic unsaturation, i.e., at least one polymerizable carbon-carbon double bond, in particular at least one carbon-carbon double bond capable of participating in a free radical polymerization wherein at least one of the carbon atoms of the double bond becomes covalently bonded to another atom, in particular a carbon atom, in a second molecule. The ethylenic unsaturation may be present as part of an α,β-unsaturated carbonyl moiety, more specifically an α,β-unsaturated ester moiety such as an acrylate functional group (-O-C(O)-CH=CH2) or a methacrylate functional group (-O-C(O)-C(CH3)=CH2).

The term "aliphatic" as used herein refers to non-aryl and encompasses non-aromatic rings (e.g., a cycloaliphatic ring). It may be linear or branched, saturated or unsaturated, cyclic or acyclic. An aliphatic ligand may be substituted by one or more groups, for example selected from alkyl, hydroxyl, halogen (Br, Cl, I), isocyanate, carbonyl (=O), amine, carboxylic acid, -C(=O)-OR', -C(=O)-O-C(=O)-R', each R' being independently a C1-C6 alkyl.

The term "Cx-Cy" as used herein refers to the number of carbon atoms comprised in a specific group or linker. For example, a C1-C6 alkyl is an alkyl comprising from 1 to 6 carbon atoms.

The term "aryl" as used herein means comprising an optionally substituted polyunsaturated aromatic group. The aryl may contain a single ring (i.e. phenyl) or more than one ring wherein at least one ring is aromatic. When the aryl comprises more than one ring, the rings may be fused or linked via a direct bond (for example biphenyl). The aromatic ring may optionally comprise one to two additional fused rings (i.e. cycloalkyl, heterocycloalkyl or heteroaryl). Examples include phenyl, naphtyl, biphenyl, phenanthrenyl and naphthacenyl.

Molecular weights herein are number averaged (Mn), weight averaged (Mw), or z-averaged molecular weights measured using gel permeation chromatography (GPC) with polystyrene standards, unless stated otherwise.

### Curable composition

This invention pertains to a curable composition comprising:
A) at least one monomer having at least one (meth)acrylate end group, selected from the group consisting of (meth)acrylate esters of alcohols having at least seven consecutive carbon atoms, and alkoxylated derivatives thereof;
B) optionally, at least one (meth)acrylate oligomer in an amount of at least 1 wt%, preferably at least 5 wt%, and more preferably at least 12 wt%, and at most 40 wt%, preferably at most 37 wt%, and most preferably at most 35 wt% based on the weight of the composition other than E) the filler;
C) at least one non-reactive diluent in an amount of at least about 5 wt%, preferably at least 7 wt%, and most preferably at least about 8 wt% and at most 40 wt%, preferably at most 35 wt%, and most preferably at most 30 wt% based on the weight of the composition other than E) the filler;
D) a free radical photoinitiator; and
E) at least one filler in an amount of at least 30 vol %, preferably at least 32 vol%, preferably at least 35 vol %, preferably at least 37 vol% and more preferably at least 40 vol % based on the total volume of the curable composition.

These constituents will now be described in detail.

### A) (Meth)acrylate Monomer

Component (A) of the curable composition of this invention consists of one or more (meth)acrylate-functionalized monomers, also designated as (meth)acrylate monomers. The (meth)acrylate-functionalized monomers used in the present invention are selected from the group consisting of (meth)acrylate esters of alcohols having at least seven consecutive carbon atoms, and alkoxylated derivatives thereof. The alcohol may be a mono-alcohol, a diol including a glycol or a polyol and may be aliphatic or aromatic. In case it is aliphatic, the alcohol may be either linear, cyclic, or branched

These compounds have at least one (meth)acrylate end group and at least 7, preferably at least 8, more preferably at least 9, and most preferably at least 10 consecutive carbon atoms bonded to one another without interruption by an oxygen atom and more generally by any heteroatom. These consecutive carbon atoms are non-(methacrylate) carbon atoms. By 'non-(meth)acrylate carbon atoms,' component (A) is intended to cover only those compounds with at least seven carbon atoms connected without interruption by an oxygen atom not counting the carbon atoms forming part of a (meth)acrylate group..

More specifically, component (A) may be selected from the group consisting of (meth)acrylate esters of aliphatic alcohols, wherein the aliphatic alcohol may be straight chain, branched or alicyclic and may be a mono-alcohol, a di-alcohol or a polyalcohol; (meth)acrylate esters of aromatic alcohols; (meth)acrylate esters of alkylaryl alcohols; (meth)acrylate esters of alkoxylated aliphatic alcohols, wherein the aliphatic alcohol may be straight chain, branched or alicyclic and may be a mono-alcohol, a di-alcohol or a polyalcohol; (meth)acrylate esters of alkoxylated aromatic alcohols; caprolactone mono(meth)acrylates; and mixtures thereof.

In addition, the (meth)acrylate monomer may have one, two or more methacrylate end groups, such as three, four, five, or six (meth)acrylate end groups. Preferably, the (meth)acrylate monomer has two (meth)acrylate end groups. As used herein, (meth)acrylate end groups encompass groups appearing at the two ends of a linear compound or at the ends of branches of a branched compound.

For example, component (A) may comprise or consist of at least one (meth)acrylate monomer selected from the group consisting of di(meth)acrylates of linear diols such as 1,7-heptanediol, 1,8-octanediol, 1,9-nonanediol, 1,10-decanediol, 1,12-dodecane diol, and 1,20-eicosanediol; di(meth)acrylates of branched diols, such as 3,3-dimethyl-1,5-pentanediol, 2,4-diethyl-1,5-pentanediol, 3-butyl-3-ethyl-1,5-pentane diol, 2,2,4-trimethyl 1,5-pentanediol; di(meth)acrylates of cyclic diols, such as tricyclodecanedimethanol diacrylate, cyclohexane-1,4-dimethanol, norbornene dimethanol, norbornane dimethanol, bisphenol A di(meth)acrylate, hydrogenated bisphenol A di(meth)acrylate or isobornyl acrylate; mono(meth)acrylates of aromatic alcohols, such as o-phenylphenolethyl acrylate, biphenylmethyl acrylate or a mono-acrylate, ethoxylated compound having a substituted benzene ring, for example a compound having a (poly)ethoxylate group bonded to a (meth)acrylate group and to an alkyl-substituted phenyl ring; and mixtures thereof..

In embodiments of the invention, component (A) does not comprise a heteroatom (including N, S, as well as O) other than the oxygen atoms forming part of the at least one (meth)acrylate group of component (A).

In a preferred embodiment of the invention, the (meth)acrylate monomer is 1,10-decanediol diacrylate.

The (meth)acrylate monomer typically has a number averaged molecular weight lower than 400 g/mol, preferably from 100 to 300 g/mol.

The (meth)acrylate monomer may be present in an amount of at least 35 wt%, preferably at least 38 wt%, and more preferably at least 40 wt%, and at most 94.9 wt%, preferably at most 85 wt%, and most preferably at most 75 wt% based on the weight of the composition other than E) the filler.

### B) Optional (Meth)acrylate Oligomer

When present, component (B) of the curable composition of this invention consists of one or more (meth)acrylate oligomers.

The term "oligomer" refers to molecules with a distribution of molecular weights and typically having one or more polymerizable functional groups. An oligomer may be the reaction product of two or more monomers and typically has a number averaged molecular weight greater than 400 g/mol, preferably 500 g/mol to 60,000 g/mol, in particular 800 to 20,000 g/mol and more preferably 1,000 g/mol to 8,000 g/mol. As is recognized, commercial products of a particular oligomer may contain impurities or other chemical species.

The term "(meth)acrylate oligomer" means an oligomer comprising a (meth)acrylate group. The term "(meth)acrylate group" encompasses acrylate groups (-O-CO-CH=CH₂) and methacrylate groups (-O-CO-C(CH₃)=CH₂).

Moreover, component (B) preferably comprises or consists of at least one (meth)acrylate oligomer having 1 to 10 (meth)acrylate groups, in particular 2 to 6 (meth)acrylate groups, more particularly 2 (meth)acrylate groups.

In particular, component (B) may comprise or consist of (meth)acrylate oligomers selected from (meth)acrylate-functionalized urethane oligomers (sometimes also referred to as "urethane (meth)acrylate oligomers", "polyurethane (meth)acrylate oligomers," or "carbamate (meth)acrylate oligomers"); (meth)acrylate-functionalized epoxy oligomers (sometimes also referred to as "epoxy (meth)acrylate oligomers"); (meth)acrylate-functionalized polyether oligomers (sometimes also referred to as "polyether (meth)acrylate oligomers"); (meth)acrylate-functionalized polydiene oligomers (sometimes also referred to as "polydiene (meth)acrylate oligomers"); (meth)acrylate-functionalized polycarbonate oligomers (sometimes also referred to as "polycarbonate (meth)acrylate oligomers"); (meth)acrylate-functionalized polyester oligomers (sometimes also referred to as "polyester (meth)acrylate oligomers"); (meth)acrylate (meth)acrylic-functionalized oligomers (sometimes also referred to as "(meth)acrylic (meth)acrylate oligomers"); and mixtures thereof. Preferably, the (meth)acrylate oligomer is a polyurethane (meth)acrylate oligomer.

Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

The polyurethane (meth)acrylate oligomers may contain two, three, four or more (meth)acrylate functional groups per molecule.

The polyurethane (meth)acrylate oligomers may be prepared by reacting aliphatic and/or aromatic diisocyanates with a polyol which may be selected from polyester polyols (including aromatic, aliphatic and mixed aliphatic/aromatic polyester polyols), polyether polyols, polycarbonate polyols, polycaprolactone polyols, polyorganosiloxane polyols (e.g., polydimethylsiloxane polyols), or polydiene polyols (e.g., polybutadiene polyols), or combinations thereof, and with a hydroxy-functionalized (meth)acrylate such as hydroxyethyl acrylate or hydroxyethyl methacrylate. Any order of addition may be practiced to prepare the polyurethane (meth)acrylate, as is known in the art. For example, the hydroxyl-functionalized (meth)acrylate may first be reacted with a polyisocyanate to obtain an isocyanate-functionalized (meth)acrylate, which may then be reacted with the polyol. In another embodiment, a polyisocyanate may first be reacted with a polyol to obtain an isocyanate-functionalized prepolymer, which is thereafter reacted with a hydroxyl-functionalized (meth)acrylate. Alternatively, all the components may be combined and reacted at the same time.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Exemplary polyester (meth)acrylate oligomers include the reaction products of acrylic or methacrylic acid or mixtures or synthetic equivalents thereof with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by polycondensation reactions of polyols (in particular, diols) and polycarboxylic acid functional compounds (in particular, dicarboxylic acids and anhydrides). The polyol and polycarboxylic acid functional compounds can each have linear, branched, cycloaliphatic or aromatic structures and can be used individually or as mixtures.

Examples of suitable epoxy (meth)acrylates include the reaction products of acrylic or methacrylic acid or mixtures thereof with an epoxy resin (polyglycidyl ether or ester). The epoxy resin may, in particular, be selected from 3,4-epoxycyclohexylmethyl-3',4'-epoxycyclohexanecarboxylate, 2-(3,4-epoxycyclohexyl-5,5-spiro-3,4-epoxy) cyclohexane-1,4-dioxane, bis(3,4-epoxycyclohexylmethyl)adipate, bis(3,4-epoxy-6-methylcyclohexyl methyl)adipate, 3,4-epoxy-6-methylcyclohexyl-3',4'-epoxy-6'-methylcyclo-hexane carboxylate, dicyclopentadiene diepoxide, a bisphenol diglycidyl ether, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol and glycerol, diglycidyl esters of aliphatic C6-C22 dibasic acids, glycidyl esters of C30-36 dimers of fatty acids, an epoxidized vegetable oil (such as epoxidized soybean oil and epoxidized linseed oil), epoxidized polybutadiene, and the like.

Suitable (meth)acrylic (meth)acrylate oligomers include oligomers which may be described as substances having an oligomeric (meth)acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

In embodiments of the invention, the (meth)acrylate-functionalized oligomer is selected from the group consisting of polyurethane (meth)acrylate oligomers, polyester (meth)acrylate oligomers and polyether (meth)acrylate oligomers. Preferably, component (B) comprises or consists of a polyether urethane (meth)acrylate or a polyester urethane (meth)acrylate, such as an aliphatic polyester-based urethane di- or tetra-acrylate oligomer, an aliphatic polyether-based urethane di- or tetra-acrylate oligomer or an aliphatic polyester/polyether-based urethane di- or tetra-acrylate oligomer. More preferably, component (B) comprises or consists of a polyether urethane acrylate, still preferably component (B) comprises or consists of an aliphatic polyether-based urethane diacrylate oligomer. In an embodiment, this oligomer may comprise residues of hydroxy ethyl acrylate, isophorone diisocyanate, and a polyether polyol.

Commercially available oligomers suitable for use as the (meth)acrylate oligomer herein include CN1964, CN9018, CN9021, and CN996, commercially available from Sartomer. The presence of component (B) makes the cured article stronger. Without any component (B), the cured article is more brittle, but may be viable in some applications, such as those that permit careful post-cure handling.

The (meth)acrylate oligomer may be present in an amount of at least 1 wt%, preferably at least 5 wt%, and more preferably at least 12 wt%, and at most 40 wt%, preferably at most 37 wt%, and most preferably at most 35 wt% based on the weight of the composition other than E) the filler.

### C) Non-Reactive Diluent

Component (C) of the curable composition of this invention consists of one or more non-reactive diluents. By "non-reactive diluent", it is meant an organic solvent that does not react when exposed to the actinic radiation used to cure the curable compositions described herein.

In embodiments of the invention, the non-reactive diluent is selected from the group consisting of polyvinylpyrrolidone, polybutadiene, polybutadiene styrene copolymers, polyisoprenes, naphthalene, dextrin, linear polyaliphatic hydrocarbons of Mn: 200-2000 g/mol, aliphatic hydrocarbons, liquid waxes, or waxes that are miscible in solution.

In some embodiments, the non-reactive diluent is selected from a polar organic compound which generally comprise at least one polar group selected from an ether group and/or an ester group and/or an epoxy group.

Diluents comprising at least one ether group may be chosen from polyethers, such as homopolymers and/or copolymers of ethylene oxide and/or of propylene oxide and/or a blend of said polyethers (homopolymers and/or copolymers) and/or derivatives thereof, these derivatives comprising, *inter alia,* said polyethers blocked at the chain end with a C₁ (methoxy) to C₄ (butoxy) alkoxy group, or with a C₂ (acetate) to C₄ (butyrate) ester group, said polyethers having a weight-average molecular weight Mw ranging from 150 to 6000 and preferably from 1000 to 3000, such as monomethoxylated or monoethoxylated polypropylene glycol. The wording "copolymer" is to be interpreted as comprising both random copolymers and block copolymers.

Diluents comprising at least one ester group may be chosen from monoesters and/or polyesters (polyfunctional esters) obtained from C₄ to C₂₁ alcohols, which alcohols are optionally alkoxylated, for example with a methoxy unit or with 1 to 10 alkoxy units chosen from oxyethylene (OE) and/or oxypropylene (OP) units, and from mono- or polyacids with a functionality ranging from 1 to 4, selected from: (a) organic acids chosen from aromatic acids having a chain length (without -CO₂H) ranging from C₆ to C₁₉ and/or aliphatic acids having a chain length (without -CO₂H function) ranging from C₄ to C₁₈ and/or cycloaliphatic acids having a chain length (without -CO₂H function) ranging from C₆ to C₁₀, and (b) inorganic acids. Examples of such compounds include propylene glycol monomethyl ether acetate and glycerol trioleate, as well as natural oils including castor oil and vegetable oils.

The esters of aromatic acids can be chosen from phthalic esters (phthalates) and trimellitic esters (trimellitates), in particular from mono- and/or dialkyl phthalates, and even more preferentially from dialkyl phthalates or hexahydrophthalates, wherein said alkyls are identical or different and chosen from C₇ to C₁₈ alkyls, and preferably C₁₀ to C₁₂ alkyls. The most preferred diluents in this family of (dialkyl (hexahydro)phthalates) are diisoundecyl phthalate and diisononyl hexahydrophthalate.

The esters of aliphatic acids can be chosen from adipic esters (adipates), citric esters (citrates), sebacic esters (sebacates) and azelaic esters (azelates).

The esters of cycloaliphatic acids can be chosen from tetrahydrophthalic esters (tetrahydrophthalates) and hexahydrophthalic esters (hexahydrophthalates).

The esters of inorganic acids can be chosen from sulphonic esters (sulphonates), in particular C₁₀ to C₂₁ alkyl sulphonates, sulphuric esters (sulphates), sulphinic esters (sulphinates), phosphoric esters (phosphates), phosphonic esters (phosphonates) and phosphinic esters (phosphinates).

Finally, in case the diluent comprises at least one epoxy group, it may be chosen from epoxidized vegetable oils such as epoxidized soybean oil or epoxidized linseed oil, and epoxidized fatty acid alkyl esters such as epoxidized methyl oleate, epoxidized iso-amyl stearate or epoxidized 2-ethylhexyl stearate.

Alternatively, the non-reactive diluent may comprise or consist of glycerol.

Some of the above materials may function as plasticizers, depending on the other constituents of the curable composition.

The non-reactive diluent may be present at least about 5 wt%, preferably at least 7 wt%, and most preferably at least about 8 wt% and at most 40 wt%, preferably at most 35 wt%, and most preferably at most 30 wt% based on the weight of the composition other than E) the filler.

### D) Free Radical Photoinitiator

Component (D) of the curable composition of this invention consists of one or more free radical photoinitiators.

Free radical photoinitiators (also referred to generally as 'photoinitiators herein) are compounds that can generate free radicals upon exposure to light of an appropriate wavelength and/or intensity. Photoinitiators can adopt two different modes of action, and are classified by mode of action as Norrish Type I and Norrish Type II photoinitiators. As used herein, the term "activity" with reference to Norrish Type I and Norrish Type II activity is intended to relate to Norrish photoinitiation and analogous reactions. For instance, a photoinitiator having Norrish Type I activity within the scope of this invention would be a photoinitiator characterized by a cleavage reaction into two radical fragments of the original photoinitiator on exposure to light. For an initiator having Norrish Type II activity, exposure to light causes the abstraction of an atom, such as hydrogen, to generate the radical. When present, the photoinitiator (F) may be a photoinitiator having Norrish type I activity and/or Norrish type II activity, more particularly a photoinitiator having Norrish type II activity.

Non-limiting types of photoinitiators suitable for use in the composition of the invention include, for example, benzoins, benzoin ethers, acetophenones, α-hydroxy acetophenones, benzil, benzil ketals, anthraquinones, phosphine oxides, acylphosphine oxides, α-hydroxyketones, phenylglyoxylates, α-aminoketones, benzophenones, thioxanthones, xanthones, acridine derivatives, phenazine derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of specific photoinitiators include, but are not limited to, 2-methylanthraquinone, 2-ethylanthraquinone, 2-chloroanthraquinone, 2-benzyanthra-quinone, 2-t-butylanthraquinone, 1,2-benzo-9,10-anthraquinone, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, 2-isopropylthioxanthone, thioxanthone, diethyl thioxanthone, 1,5-acenaphthylene, benzil, α-hydroxyketone, 2,4,6-trimethylbenzoyldiphenyl phosphine oxide, , 2,2-dimethoxy-1,2-diphenylethanone, 1-hydroxycyclohexyl phenyl ketone, 2-methyl-1-[4-(methylthio) phenyl]-2-morpholinopropanone, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid sodium salt monohydrate, (benzene) tricarbonylchromium, , benzoin isobutyl ether, benzophenone/1-hydroxycyclohexyl phenyl ketone 50/50 blend, 3,3',4,4'-benzophenonetetracarboxylic dianhydride, 4-benzoylbiphenyl, 2-benzyl-2-(dimethyl-amino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, , 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone 50/50 blend, 4'-ethoxyacetophenone, 2,4,6-trimethylbenzoyldiphenylphosphine oxide, 3'-hydroxyacetophenone, 4'-hydroxyacetophenone, 3-hydroxybenzophenone, 4-hydroxybenzophenone, 2-methylbenzophenone, 3-methylbenzophenone, methybenzoylformate, phenanthrene-quinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, and combinations thereof.

In particular, the photoinitiator may comprise a photoinitiator selected from a benzophenone such as SpeedCure^{®} BP (benzophenone), SpeedCure^{®} 7005 (polymeric benzophenone), SpeedCure^{®} 7006 (polymeric benzophenone), SpeedCure^{®} EMK (4,4'-bis(diethylamino)benzophenone) or SpeedCure^{®} BMS (4-benzoyl-4'-methyldiphenyl sulphide); a thioxanthone such as SpeedCure^{®} 7010 (polymeric thioxanthone), SpeedCure^{®} ITX (isopropyl thioxanthone), SpeedCure^{®} DETX (2,4-diethylthioxanthone) or SpeedCure^{®} CPTX (1-chloro-4-propoxythioxanthone); an α-hydroxy acetophenone; an acylphosphine oxide such as SpeedCure^{®} BPO (phenyl bis(2,4,6-trimethylbenzoyl)-phosphine oxide), SpeedCure^{®} TPO (2,4,6-trimethylbenzoyldiphenylphosphine oxide) or SpeedCure^{®} TPO-L (ethyl (2,4,6-trimethylbenzoyl)phenyl phosphinate); a phenylglyoxylate such as SpeedCure^{®} MBF (methylbenzoylformate); and mixtures thereof.

The free radical photoinitiator may be present in the curable composition in an amount of from 0.1 to 5% based on the weight of the composition other than E) the filler.

### E) Filler

Component (E) of the curable composition of this invention consists of one or more fillers.

In embodiments of the invention, the filler is selected from the group consisting of ceramic precursors such as silicates, including cordierite, mullite, steatite (magnesium silicates), kaolinite, talc, serpentinite and quartz; metal oxides such as magnesium oxide (MgO) aluminium oxide (Al₂O₃), uranium oxide (UO₂), yttrium barium copper oxide (YBa₂Cu₃Oₓ), zinc oxide (ZnO), zirconium dioxide (zirconia) and spinel; metal carbides such as tungsten carbide, titanium carbide and silicon carbide (SiC); barium titanate; strontium titanate; sialon (silicon aluminium oxynitride); silicon nitride (Si₅N₄); silicon oxycarbide (SiOₓC_{y}); silicon carbonitride (Si₃+xN₄Cₓ+y ); silicon oxynitride (SiOxNy); and mixtures thereof. Alternatively or in addition, the filler may be selected from metal powders (such as Al or Mg).

The fillers are present in an amount of at least 30 vol %, preferably at least 32 vol%, preferably at least 35 vol %, preferably at least 37 vol% and more preferably at least 40 vol % based on the total volume of the curable composition. Preferably, the filler is present in an amount of at most 90 vol%, preferably at most 80 vol %, preferably at most 70 vol %, preferably at most 65 vol %, and most preferably at most 60 vol % based on the total volume of the curable composition.

### F) Optional reactive diluent, such as a (meth)acrylate monomer other than constituent A)

The curable composition of the invention may optionally include component (F), namely reactive diluent, such as one or more (meth)acrylate-functionalized monomers other than the monomers described as component A).

The optional (meth)acrylate monomer may have a molecular weight of less than 600 g/mol, in particular from 100 to 550 g/mol, more particularly 200 to 500 g/mol.

The optional (meth)acrylate monomer may have 1 to 6 (meth)acrylate groups, in particular 1 to 3 (meth)acrylate groups.

This optional constituent may comprise a mixture of (meth)acrylate monomers having different functionalities. For example, it may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 to 6, acrylate and/or methacrylate groups per molecule (referred to herein as "poly(meth)acrylate-functionalized monomer").

In one embodiment, the optional (meth)acrylate monomer comprises or consists of a mono(meth)acrylate-functionalized monomer.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid and that the alcohol comprises less than seven carbon atoms); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid and that the alcohol comprises less than seven carbon atoms); mono-(meth)acrylate esters of alkoxylated (e.g., ethoxylated and/or propoxylated) aromatic alcohols (such as alkoxylated phenols); and mixtures thereof.

The following compounds are specific examples of mono(meth)acrylate-functionalized monomers suitable for use as component (F): methyl (meth)acrylate; ethyl (meth)acrylate; n-propyl (meth)acrylate; n-butyl (meth)acrylate; isobutyl (meth)acrylate; n-hexyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; 2-phenoxyethyl (meth)acrylate; alkoxylated phenol (meth)acrylates; benzyl (meth)acrylate, cyclic trimethylolpropane formal (meth)acrylate; (2,2-dimethyl-1,3-dioxolan-4-yl)methyl (meth)acrylate; (2-ethyl-2-methyl-1,3-dioxolan-4-yl)methyl (meth)acrylate; glycerol formal methacrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; methoxy polyethylene glycol (meth)acrylates; a caprolactone mono(meth)acrylate; carboxy ethyl acrylate; phenol (EO) acrylate; and combinations thereof.

In another embodiment, component (F) may comprise a hydroxy ethyl-butyl urethane (meth)acrylate, a 3-(2-hydroxyalkyl)oxazolidinone (meth)acrylate, a dicarboxylic acid monoester of hydroxyalkyl (meth)acrylate, or mixtures thereof.

In another embodiment, the optional (meth)acrylate monomer may comprise or consist of a poly(meth)acrylate-functionalized monomer. Examples of suitable poly(meth)acrylate-functionalized monomers include acrylic and methacrylic esters of polyols selected from ethylene glycol, di-, tri- or tetraethylene glycol, 1,2- or 1,3-propylene glycol, di-, tri- or tetra(1,2-propylene glycol), di-, tri- or tetra(1,3-propylene glycol), 1,2-, 1,3- or 1,4-butylene glycol, di-, tri- or tetra(1,4-butylene glycol), 2-methyl-1,3-propanediol, 2,2-dimethyl-1,3-propanediol, 2,2-diethyl-1,3-propanediol, 2-methyl-2-ethyl-1,3-propanediol, 3-methyl-1,5-pentanediol, cyclohexanediol, a dianhydrohexitol (i.e. isosorbide, isomannide, isoidide), as well as the alkoxylated (i.e. ethoxylated and/or propoxylated) derivatives thereof; and mixtures thereof. Such polyols may be fully or partially esterified (with (meth)acrylic acid, (meth)acrylic anhydride, (meth)acryloyl chloride or the like), provided they contain at least two (meth)acrylate functional groups per molecule.

Exemplary poly(meth)acrylate-functionalized monomers may include ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; neopentyl glycol di(meth)acrylate; 2-methyl-2,4-pentanediol di(meth)acrylate; polybutadiene di(meth)acrylate; glyceryl di(meth)acrylate; glyceryl tri(meth)acrylate; trimethylolethane tri(meth)acrylate; trimethylolethane di(meth)acrylate; trimethylolpropane tri(meth)acrylate; ethoxylated trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; neopentylglycol (PO)₂ diacrylate; neopentyl glycol hydroxypivalate diacrylate; tripropylene glycol diacrylate; PEGDAs; trimethylolpropane triacrylate; trimethylolpropane hydroxyalkylether triacrylates; pentaerythritol (EO)ₙ tetraacrylate; and combinations thereof.

In embodiments of the invention, the (meth)acrylate monomer is selected from the group consisting of tetrahydrofurfuryl acrylate, trimethylolpropane formal acrylate, 1,4-butanediol di(meth)acrylate, 1,6-hexanediol diacrylate, and combinations thereof.

Component (F) may represent from 1 to 30 wt.%, preferably from 2 to 20 wt.%, and most preferably from 3 to 15 wt.% based on the weight of the composition other than E) the filler.

### Other Optional Additives

In embodiments of the invention, the curable composition may comprise other optional additives. Such additives include, but are not limited to, UV accelerators (such as amine accelerators), UV-blockers (such as Carboprotect^{®} UV absorber commercially available from Tinuvin) and UV-790), antioxidants, photostabilizers, foam inhibitors, flow or leveling agents, colorants, pigments, dispersants (wetting agents), slip additives, thixotropic agents, matting agents, thermoplastics such as acrylic resins that do not contain any free radical-polymerizable functional groups, waxes or other various additives, including any of the additives conventionally utilized in the molding arts.

The optional additives may be present in an amount of about 1 to about 25 wt%, preferably about 2 to about 20 wt%, and most preferably about 3 to about 15 wt% based on the weight of the curable composition other than the filler E).

In an embodiment of the invention, the composition does not comprise cyanoacrylate. As used herein, the term "cyanoacrylate" refers to an organic compound which contains a carbon-carbon double bond, wherein one carbon atom involved in the carbon-carbon double bond is substituted with a cyano (-CN) group and an ester (-COOR) group.

In an embodiment of the invention, the relative amounts of the various constituents are as follows. Component (A) is present (all amounts in wt% of the composition other than filler (E) except where noted otherwise) from 35-94.9, component (B) is not present, component (C) is present from 5-40, component (D) is present from 0.1 - 5, and the filler is present from at least 30 vol % to at most 80 vol % based on the total volume of the curable composition.

In another embodiment of the invention, the relative amounts of the various constituents are as follows. Component (A) is present (all amounts in wt% of the composition other than filler (E) except where noted otherwise) from 38-85, component (B) is present from 5-37, component (C) is present from 7-37, component (D) is present from 0.1 - 5, and the filler is present from at least 35 vol % to at most 75 vol % based on the total volume of the curable composition.

In another embodiment of the invention, the relative amounts of the various constituents are as follows. Component (A) is present (all amounts in wt% of the composition other than filler (E) except where noted otherwise) from 40-75, component (B) is present from 12-35, component (C) is present from 8-30, component (D) is present from 0.1 - 5, and the filler is present from at least 40 vol % to at most 60 vol % based on the total volume of the curable composition.

The composition of this invention may be prepared by mixing components (A), (B), (C), and (D) together with any optional constituents (including optional component (F) and any UV blockers, UV accelerators, surfactants, and dispersants) until a homogenous blend is formed. Then, the filler is blended therein to form a well-mixed slurry suitable for printing. Often a room temperature printer is used. In embodiments of the invention, the slurry has a viscosity suitable to be printed by any 3D printer used to print 3D articles.

The curable composition as described herein is cured in a 3D printer in step (a) to form a cured article comprising filler particles and a binder made from the curable composition of this invention. Printing of the slurry may be done in a conventional manner using any suitable 3D printing method. Non-limiting examples of suitable 3D printing processes may include VAT polymerization, digital light printing (DLP), stereolithography (SLA), inkjet printing, multi-jet printing, piezoelectric printing, actinically-cured extrusion, liquid crystal display (LCD) printing, volumetric printing, and gel deposition printing, and hybrids of any of these. The building method may be "layer by layer" or continuous. The liquid may be in a vat, or deposited with an inkjet or gel deposition, for example.

Then, the cured article is typically subjected to a "debinding" step (b), i.e. heated to a temperature sufficient to burn off all of the material other than the filler, including the binder (typically below 750°C). In case a ceramic article is prepared, the product thus obtained is then sintered, i.e. exposed to a temperature (typically above 750°C) sufficient to fuse filler particles together. If too much or even any organic material remains after the debinding step, a defect in the material could be caused. Prior to sintering the cured article, the cured article may thus be cleaned. Cleaning may be accomplished by any means known to those of ordinary skill in the art and, in some cases, may include washing with water and/or organic solvents to remove residual resins.

The article formed by the methods of the invention may be a wide variety of articles. Such articles include industrial, consumer and medical products, such as computer heat sinks, electrical contacts, hand tools, postage meters, eyeglasses, and wristwatch cases. Articles formed by the present invention may also be high-temperature systems, such as light bulbs and jet engine parts; medical devices, such as dental implants, orthopedic implants, and surgical instruments; and other products, such as flame tubes, heat exchangers, firing trays, sealing gaskets, ceramic machining tools, wire guides, and mechanical components. In an embodiment, the formed article is a mold for casting or thermoforming an article.

### ASPECTS OF THE INVENTION

1. A curable composition comprising:
   A) at least one monomer having at least one (meth)acrylate end group, selected from the group consisting of (meth)acrylate esters of alcohols having at least seven consecutive carbon atoms, and alkoxylated derivatives thereof;
   B) optionally, at least one (meth)acrylate oligomer in an amount of at least 1 wt%, preferably at least 5 wt%, and more preferably at least 12 wt%, and at most 40 wt%, preferably at most 37 wt%, and most preferably at most 35 wt% based on the weight of the composition other than E) the filler;
   C) at least one non-reactive diluent in an amount of at least about 5 wt%, preferably at least 7 wt%, and most preferably at least about 8 wt% and at most 40 wt%, preferably at most 35 wt%, and most preferably at most 30 wt% based on the weight of the composition other than E) the filler,
   D) a free radical photoinitiator; and
   E) at least one filler in an amount of at least 30 vol %, preferably at least 32 vol%, preferably at least 35 vol %, preferably at least 37 vol% and more preferably at least 40 vol % based on the total volume of the curable composition.
2. The curable composition of aspect 1, wherein the at least one (meth)acrylate monomer (A) is present in an amount of in an amount of at least 35 wt%, preferably at least 38 wt%, and more preferably at least 40 wt%, and at most 94.9 wt%, preferably at most 85 wt%, and most preferably at most 75 wt% based on the weight of the composition other than E) the filler.
3. The curable composition of aspects 1 or 2 comprising the at least one (meth)acrylate oligomer (B).
4. The curable composition of any of aspects 1-3, wherein the at least one (meth)acrylate monomer (A) does not comprise an oxygen atom other than the oxygen atoms forming part of at least one (meth)acrylate end group.
5. The curable composition of any of aspects 1-4, wherein at least one (meth)acrylate monomer (A) has two or more (meth)acrylate end groups, preferably two (meth)acrylate end groups.
6. The curable composition of any of aspects 1-5, wherein the at least one (meth)acrylate monomer (A) is aliphatic.
7. The curable composition of aspect 6, wherein the at least one (meth)acrylate monomer (A) is cyclic, linear, or branched.
8. The curable composition of any of aspects 1-5, wherein the at least one (meth)acrylate monomer (A) is aromatic.
9. The curable composition of any of aspects 1 to 8, wherein said at least one (meth)acrylate monomer (A) does not comprise a heteroatom other than the oxygen atoms forming part of at least one (meth)acrylate end group.
10. The curable composition of any of aspects 1-9, wherein said at least 7, preferably at least 8, more preferably at least 9, and most preferably at least 10 consecutive carbon atoms of the (meth)acrylate monomer (A) are bonded to one another without interruption by a heteroatom.
11. The curable composition of any of aspects 1-10, wherein the at least one (meth)acrylate monomer (A) is selected from the group consisting of di(meth)acrylates of heptanediol, octanediol, nonanediol, decanediol, dodecane diol, and eicosanediol.
12. The curable composition of aspect 11, wherein the at least one (meth)acrylate monomer (A) is decanediol diacrylate.
13. The curable composition of any of aspects 1-12, wherein the composition comprises the at least one (meth)acrylate oligomer (B), and the at least one (meth)acrylate oligomer (B) is selected from the group consisting of a polyurethane (meth)acrylate oligomer, a polyester (meth)acrylate oligomer, a polyether (meth)acrylate oligomer, and a polycarbonate (meth)acrylate oligomer
14. The curable composition of aspect 13, wherein the at least one (meth)acrylate oligomer (B) is a polyurethane (meth)acrylate oligomer.
15. The curable composition of aspect 14, wherein the polyurethane (meth)acrylate oligomer is an aliphatic polyether-based urethane diacrylate oligomer.
16. The curable composition of any of aspects 1-15, wherein the non-reactive diluent is selected from the group consisting of polyvinylpyrrolidone, polybutadiene, polybutadiene styrene copolymers, polyisoprenes, naphthalene, dextrin, linear polyaliphatic hydrocarbons of Mn: 200-2000 g/mol, aliphatic hydrocarbons; polyethers, such as homopolymers and/or copolymers of ethylene oxide and/or of propylene oxide and/or a blend of said polyethers and/or derivatives thereof comprising said polyethers blocked at the chain end with a C₁ (methoxy) to C₄ (butoxy) alkoxy group, or with a C₂ (acetate) to C₄ (butyrate) ester group; monoesters and/or polyesters obtained from C₄ to C₂₁ alcohols, which alcohols are optionally alkoxylated, for example with a methoxy unit or with 1 to 10 alkoxy units chosen from oxyethylene (OE) and/or oxypropylene (OP) units, and from mono- or polyacids with a functionality ranging from 1 to 4, selected from: (a) organic acids chosen from aromatic acids having a chain length (without -CO₂H) ranging from C₆ to C₁₀ and/or aliphatic acids having a chain length (without -CO₂H function) ranging from C₄ to C₁₈ and/or cycloaliphatic acids having a chain length (without -CO₂H function) ranging from C₆ to C₁₀, and (b) inorganic acids, such as propylene glycol monomethyl ether acetate and glycerol trioleate, as well as natural oils including castor oil and vegetable oils, liquid waxes, or waxes that are miscible in solution.
17. The curable composition of any of aspects 1-16, wherein the filler is selected from the group consisting of ceramic precursors such as silicates, including cordierite, mullite, steatite (magnesium silicates), kaolinite, talc, serpentinite and quartz; metal oxides such as magnesium oxide (MgO) aluminium oxide (Al₂O₃), uranium oxide (UO₂), yttrium barium copper oxide (YBa₂Cu₃Oₓ), zinc oxide (ZnO), zirconium dioxide (zirconia) and spinel; metal carbides such as tungsten carbide, titanium carbide and silicon carbide (SiC); barium titanate; strontium titanate; sialon (silicon aluminium oxynitride); silicon nitride (Si₅N₄); silicon oxycarbide (SiOₓC_{y}); silicon carbonitride (Si₃+xN₄Cₓ+y ); silicon oxynitride (SiOxNy); and mixtures thereof.
18. The curable composition of any of aspects 1-17, wherein the filler is present in an amount of at most 90 vol%, preferably at most 80 vol %, preferably at most 70 vol %, preferably at most 65 vol %, and most preferably at most 60 vol % based on the total volume of the curable composition.
19. The curable composition of any of aspects 1-18 further comprising an accelerator, such as an amine accelerator.
20. The curable composition of any of aspects 1-19 further comprising a UV-blocker.
21. The curable composition of any of aspects 1-20 further comprising a surfactant.
22. The curable composition of any of aspects 1-21 further comprising a dispersant.
23. The curable composition of any of aspects 1-22, wherein the composition does not contain a cyano(meth)acrylate monomer.
24. The curable composition of any of aspects 1-23 further comprising a reactive diluent (F), such as a (meth)acrylate monomer, other than component A).
25. A method for making a 3D-printed article comprising the steps of:
   (a) curing the curable composition according to any of aspects 1 to 24 in a 3D printer to form a cured article comprising filler particles and a binder made from the curable composition, and
   (b) heating the cured article to a temperature sufficient to burn off all of the material other than the filler, including the binder.
26. A method for making a ceramic article comprising the steps of:
   (a) curing the curable composition according to any of aspects 1 to 11 in a 3D printer to form a cured article comprising filler particles and a binder made from the curable composition,
   (b) heating the cured article to a temperature sufficient to burn off all of the material other than the filler, including the binder, and
   (c) sintering the article obtained in step (b) by exposing it to a temperature sufficient to fuse filler particles together.
27. The method of aspect 26 further comprising, prior to sintering, cleaning the article obtained in step (b).

Although the invention is illustrated and described herein with reference to specific embodiments, the invention is not intended to be limited to the details shown. Rather, various modifications may be made in the details within the scope and range of equivalents of the claims and without departing from the invention.

### EXAMPLES

### Example 1:

50wt% of a monomer selected from the table below was mixed with 50wt% 3µm alumina (i.e. aluminium oxide) powder (US Research Nanomaterials, Inc) and 2wt% Speedcure TPO-L (based on monomer weight) to evaluate relative stability and viscosity of the slurry. The slurry was mixed using a DAC 300-100 PRO Speedmixer in 30 seconds at speeds between 2000-3500 rpm until the composites were well incorporated. Speeds used depended on the viscosity of the slurry.

**Table 1. Monomers used for viscosity and stability evaluations**

| **Trade Name** | **Chemical name** |
|---|---|
| SR606A | Neopentylglycol hydroxypivalate diacrylate |
| SR610 | Polyethylene glycol (600) diacrylate |
| SR494 | Ethoxylated (4) pentaerythritol tetraacrylate |
| SR595 | 1,10-decanediol diacrylate |

Once at room temperature the slurries were evaluated for relative viscosity: the slurry is considered suitable for further processing if it flows and not suitable if pasty. The slurries were then ranked from lowest to highest viscosity based on this qualitative analysis. The results are provided in Table 2.

The slurries were then allowed to sit for a week at ambient conditions to evaluate the stability of the formulations. After a week the formulations were qualitatively evaluated for degree of settling and ranked. Formulations were gently remixed by hand stirring to evaluate if alumina oxide powders were easy or hard to redisperse. The results are provided in Table 2. Monomers SR595 and SR606A gave the lowest viscosity and were tested for build plate adhesion. 5mm squares were printed using a 60s exposure on a Phrozen 8K mini 3D printer. One square was printed in each corner and the middle of the build-plate to evaluate the entire build area. The print was stopped after one layer to determine how well the slurries stuck to the build plate. These results are also in Table 2.

**Table 2. Viscosity and stability results of the monomers from Table 1.**

| **Trade Name** | **Viscosity** | **Stability** | **Print performance** |
|---|---|---|---|
| SR606A | 2 | Significant settling, difficult to remix | 2/5 squares adhered to build plate. |
| SR610 | 4 - Highest | Significant settling, could remix | |
| SR494 | 3 | Significant settling, difficult to remix | |
| SR595 | 1 - Lowest | Slight settling, easily remixed | All squares adhered to build plate |

SR595 was selected to move to further testing. Non-reactive diluents, i.e. PEG600 (polyethylene glycol, DOW) and triacetin (Sigma Aldrich) were each added at 10wt% to 90wt% SR595 with 2% TPO-L (based on monomer weight). This resin blend was made first by mixing until all components are miscible, then this resin blend was mixed with 50vol% 3µm alumina powders and mixed using a DAC 300-100 PRO Speedmixer in 30 seconds at speeds between 2000-3500 rpm until the composites were well incorporated. Speeds used depended on the viscosity of the slurry.

**Table 3.**

| **Resin blend** | **Viscosity** | **Stability** | **Print performance** |
|---|---|---|---|
| SR595/PEG600 90/10 | Higher | Stable | Satisfactory |
| SR595/triacetin | Lower | Stable | Satisfactory |

Finally, parts were printed using the following as the curable composition: SR595/Triacetin/CN1964 (urethane dimethacrylate 60/10/30 and 2wt.% of Speedcure TPO-L (based on monomer weight). This was mixed with 50vol% aluminum oxide powder as previously described. The slurry was printed on an Origin 3D printer using 50 µm layer thickness and 6s/layer exposure. Parts were removed from the printer and cleaned in IPA for 10 minutes.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

1. A curable composition comprising:
A) at least one (meth)acrylate monomer having at least one (meth)acrylate end group, selected from the group consisting of (meth)acrylate esters of alcohols having at least seven consecutive carbon atoms, and alkoxylated derivatives thereof;
B) optionally, at least one (meth)acrylate oligomer in an amount of at least 1 wt%, preferably at least 5 wt%, and more preferably at least 12 wt%, and at most 40 wt%, preferably at most 37 wt%, and most preferably at most 35 wt% based on the weight of the composition other than E) the filler;
C) at least one non-reactive diluent in an amount of at least about 5 wt%, preferably at least 7 wt%, and most preferably at least about 8 wt% and at most 40 wt%, preferably at most 35 wt%, and most preferably at most 30 wt% based on the weight of the composition other than E) the filler,
D) a free radical photoinitiator; and
E) at least one filler in an amount of at least 30 vol %, preferably at least 32 vol%, preferably at least 35 vol %, preferably at least 37 vol% and more preferably at least 40 vol % based on the total volume of the curable composition.

2. The curable composition of claim 1, wherein the at least one (meth)acrylate monomer (A) is present in an amount of in an amount of at least 35 wt%, preferably at least 38 wt%, and more preferably at least 40 wt%, and at most 94.9 wt%, preferably at most 85 wt%, and most preferably at most 75 wt% based on the weight of the composition other than E) the filler.

3. The curable composition of claims 1 or 2 comprising component (B), wherein component (B) comprises or consists of a polyurethane (meth)acrylate oligomer, a polyester (meth)acrylate oligomer, a polyether (meth)acrylate oligomer, preferably a polyurethane (meth)acrylate oligomer, most preferably a polyether urethane acrylate, still preferably component (B) comprises or consists of an aliphatic polyether-based urethane diacrylate oligomer.

4. The curable composition of any of claims 1-3, wherein component (A) is selected from the group consisting of (meth)acrylate esters of aliphatic alcohols, wherein the aliphatic alcohol may be straight chain, branched or alicyclic and may be a mono-alcohol, a di-alcohol or a polyalcohol; (meth)acrylate esters of aromatic alcohols; (meth)acrylate esters of alkylaryl alcohols; (meth)acrylate esters of alkoxylated aliphatic alcohols, wherein the aliphatic alcohol may be straight chain, branched or alicyclic and may be a mono-alcohol, a di-alcohol or a polyalcohol; (meth)acrylate esters of alkoxylated aromatic alcohols; caprolactone mono(meth)acrylates; and mixtures thereof.

5. The curable composition of any of claims 1-4, wherein component (A) comprises or consists of at least one (meth)acrylate monomer selected from the group consisting of di(meth)acrylates of linear diols such as heptanediol, octanediol, nonanediol, decanediol, dodecane diol, and eicosanediol ; di(meth)acrylates of branched diols, such as 3,3-dimethyl-1,5-pentanediol, 2,4-diethyl-1,5-pentanediol, 3-butyl-3-ethyl-1,5-pentane diol, 2,2,4-trimethyl 1,5-pentanediol; di(meth)acrylates of cyclic diols, such as tricyclodecanedimethanol diacrylate, cyclohexane-1,4-dimethanol, norbornene dimethanol, norbornane dimethanol, bisphenol A di(meth)acrylate, hydrogenated bisphenol A di(meth)acrylate or isobornyl acrylate; mono(meth)acrylates of aromatic alcohols, such as o-phenylphenolethyl acrylate, biphenylmethyl acrylate or a compound having a (poly)ethoxylate group bonded to a (meth)acrylate group and to an alkyl-substituted phenyl ring; preferably, the (meth)acrylate monomer is 1,10-decanediol diacrylate.

6. The curable composition of any of claims 1-5, wherein the (meth)acrylate monomer (A) has two or more (meth)acrylate end groups, preferably two (meth)acrylate end groups.

7. The curable composition of any of claims 1-6, wherein the non-reactive diluent is selected from the group consisting of polyvinylpyrrolidone, polybutadiene, polybutadiene styrene copolymers, polyisoprenes, naphthalene, dextrin, linear polyaliphatic hydrocarbons of Mn: 200-2000 g/mol, aliphatic hydrocarbons; polyethers, such as homopolymers and/or copolymers of ethylene oxide and/or of propylene oxide and/or a blend of said polyethers and/or derivatives thereof comprising said polyethers blocked at the chain end with a C₁ (methoxy) to C₄ (butoxy) alkoxy group, or with a C₂ (acetate) to C₄ (butyrate) ester group; monoesters and/or polyesters obtained from C₄ to C₂₁ alcohols, which alcohols are optionally alkoxylated, for example with a methoxy unit or with 1 to 10 alkoxy units chosen from oxyethylene (OE) and/or oxypropylene (OP) units, and from mono- or polyacids with a functionality ranging from 1 to 4, selected from: (a) organic acids chosen from aromatic acids having a chain length (without -CO₂H) ranging from C₆ to C₁₀ and/or aliphatic acids having a chain length (without -CO₂H function) ranging from C₄ to C₁₈ and/or cycloaliphatic acids having a chain length (without -CO₂H function) ranging from C₆ to C₁₀, and (b) inorganic acids, such as propylene glycol monomethyl ether acetate and glycerol trioleate, as well as natural oils including castor oil and vegetable oils, liquid waxes, or waxes that are miscible in solution.

8. The curable composition of any of claims 1-7, wherein the filler is selected from the group consisting of ceramic precursors such as silicates, including cordierite, mullite, steatite (magnesium silicates), kaolinite, talc, serpentinite and quartz; metal oxides such as magnesium oxide (MgO) aluminium oxide (Al₂O₃), uranium oxide (UO₂), yttrium barium copper oxide (YBa₂Cu₃Oₓ), zinc oxide (ZnO), zirconium dioxide (zirconia) and spinel; metal carbides such as tungsten carbide, titanium carbide and silicon carbide (SiC); barium titanate; strontium titanate; sialon (silicon aluminium oxynitride); silicon nitride (Si₅N₄); silicon oxycarbide (SiOₓC_{y}); silicon carbonitride (Si₃+xN₄Cₓ+y ); silicon oxynitride (SiOxNy); and mixtures thereof.

9. The curable composition of any of claims 1-7, wherein the filler is selected from the group consisting of metal powders, such as Al or Mg.

10. The curable composition of any of claims 1-9, wherein the filler is present in an amount of at most 90 vol%, preferably at most 80 vol %, preferably at most 70 vol %, preferably at most 65 vol %, and most preferably at most 60 vol % based on the total volume of the curable composition.

11. The curable composition of any of claims 1-10 further comprising a reactive diluent (F), such as a (meth)acrylate monomer, other than component A).

12. A method for making a 3D-printed article comprising the steps of:
(c) curing the curable composition according to any of claims 1 to 11 in a 3D printer to form a cured article comprising filler particles and a binder made from the curable composition, and
(d) heating the cured article to a temperature sufficient to burn off all of the material other than the filler, including the binder.

13. A method for making a ceramic article comprising the steps of:
(d) curing the curable composition according to any of claims 1 to 11 in a 3D printer to form a cured article comprising filler particles and a binder made from the curable composition,
(e) heating the cured article to a temperature sufficient to burn off all of the material other than the filler, including the binder, and
(f) sintering the article obtained in step (b) by exposing it to a temperature sufficient to fuse filler particles together.

14. The method of claim 13 further comprising, prior to sintering, cleaning the article obtained in step (b).
